(19) Europäisches Patentamt / European Patent Office / Office européen des brevets

(11) **EP 2 157 684 B1**

(12) **EUROPEAN PATENT SPECIFICATION**

(45) Date of publication and mention
of the grant of the patent:
**06.03.2019 Bulletin 2019/10**

(51) Int Cl.:
**H02M 7/12** *(2006.01)*     **H02M 7/162** *(2006.01)*
**H02M 7/219** *(2006.01)*     **H02M 1/42** *(2007.01)*

(21) Application number: **08763963.9**

(22) Date of filing: **30.05.2008**

(86) International application number:
**PCT/JP2008/001366**

(87) International publication number:
**WO 2008/149530 (11.12.2008 Gazette 2008/50)**

(54) **POWER-SUPPLY CONTROL APPARATUS AND HEAT PUMP DEVICE USING THE POWER-SUPPLY CONTROL APPARATUS**

NETZTEILSTEUERUNGSVORRICHTUNG UND WÄRMEPUMPE MIT EINER NETZTEILSTEUERUNGSVORRICHTUNG

DISPOSITIF DE COMMANDE D'ALIMENTATION ÉLECTRIQUE ET DISPOSITIF DE POMPE À CHALEUR L'UTILISANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.06.2007 JP 2007147663**

(43) Date of publication of application:
**24.02.2010 Bulletin 2010/08**

(60) Divisional application:
**13159251.1 / 2 605 394**

(73) Proprietor: **Panasonic Corporation**
**Kadoma-shi**
**Osaka 571-8501 (JP)**

(72) Inventors:
• **DOYAMA, Yoshiaki**
**Osaka 540-6207 (JP)**
• **KYOGOKU, Akihiro**
**Osaka 540-6207 (JP)**
• **KAWASAKI, Tomohiro**
**Osaka 540-6207 (JP)**

(74) Representative: **Eisenführ Speiser**
**Patentanwälte Rechtsanwälte PartGmbB**
**Postfach 10 60 78**
**28060 Bremen (DE)**

(56) References cited:
| | |
|---|---|
| **EP-A2- 0 388 850** | **EP-A2- 1 251 631** |
| **GB-A- 2 148 553** | **JP-A- H089 647** |
| **JP-A- H06 351 249** | **JP-A- H07 177 743** |
| **JP-A- 2000 115 999** | **JP-A- 2000 115 999** |
| **JP-A- 2001 314 085** | **JP-A- 2002 315 343** |
| **JP-A- 2005 229 757** | **JP-A- 2005 318 700** |
| **JP-A- 2005 318 700** | |

**Description**

Technical Field

The present invention relates to a power-supply control apparatus which reduces harmonics in an AC current supplied from a power supply and improves a power factor, and a heat pump apparatus having the power-supply control apparatus. In this case, "heat pump apparatus" is one which includes, for example, air conditioning equipment such as room air conditioners, refrigerating and freezing equipment such as refrigerators, a heat pump type water heater, and the like.

Background Art

Document EP 0 388 850 A2 discloses the semiconductor electric power conversion system wherein thyristors are used as rectifying and switching elements to perform power supply to a load based on a 3-phase AC supply. The electric power conversion system comprises an input current detector as well as an output current detector, and the detection signals are used for generating gate blocking instructions in case of malfunction. Specifically, if the AC input current flowing in the rectifier circuit is equal to or larger in value than the DC output current flowing out of the rectifier circuit, it is decided that a malfunction occurred.

Document GB 2 148 553 A discloses a heat pump system wherein a heat pump comprises a rectifier, a variable frequency inverter, as well as an AC motor forming the load of the inverter, the motor driving the compressor of the heat pump system. The frequency of the inverter is controlled so as to vary the speed of the motor and, thus, of the compressor to achieve the desired operating conditions of the heat pump system. Control is performed to limit the rate at which the frequency increases so as to keep the input current below a set value.

Furthermore, as a heat pump apparatus having a conventional power-supply control apparatus which reduces harmonics in an AC current supplied from a power supply and improves a power factor, there is air conditioning equipment disclosed in Japanese Unexamined Patent Publication No. H04-271299, for example. A control method in the air conditioning equipment is one which performs ON/OFF control of the switching elements to form a sine-wave output voltage whose harmonics are reduced by providing a reactor and switching elements which constitute a closed circuit together with a power supply in an AC/DC conversion circuit.

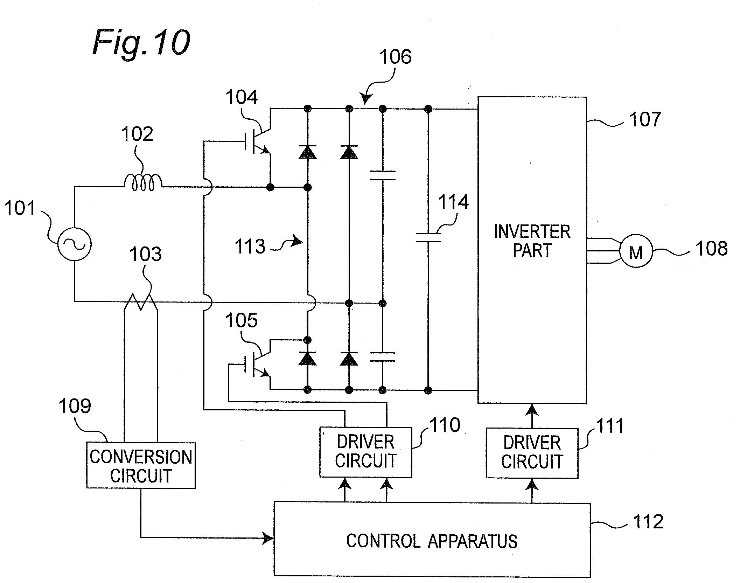

Fig. 10 is a schematic circuit diagram showing air conditioning equipment that is the conventional heat pump apparatus disclosed in Japanese Unexamined Patent Publication No. H04-271299. As shown in Fig. 10, the conventional air conditioning equipment includes an AC/DC conversion circuit 106 which converts an AC current of an AC power supply 101 into a DC current, an inverter part 107 to which the DC current is supplied, and an input current control circuit having a reactor 102 and two switching elements 104 and 105 which are for improving an input power factor and reducing harmonics. Furthermore, the conventional air conditioning equipment shown in Fig. 10 includes a compressor motor 108 driven by the inverter part 107, an input current sensor (current transformer) 103 which detects an AC input current, a conversion circuit 109 which converts the detected AC input current into a voltage, a switching element driver circuit 110 which drives the switching elements 104 and 105, an inverter part driver circuit 111 which drives the inverter part 107, and a control apparatus 112 which controls the switching element driver circuit 110 and the inverter part driver circuit 111.

The control apparatus 112 performs ON/OFF control of the switching elements 104 and 105, and changes ON times of the switching elements 104 and 105 in response to the detected AC input current. The control apparatus 112 controls so that time ratios of the ON times of the switching elements 104 and 105 are increased if the AC input current detected by the current sensor 103 is larger than a predetermined value; and the time ratios of the ON times of the switching elements 104 and 105 are decreased if the detected AC input current is smaller than the predetermined value.

JP patent application 2005-318700 discloses power supply which comprises an overcurrent detection circuit for an input current, an overvoltage detection circuit for an output voltage, an undervoltage detection circuit for an output voltage, and an overtemperature detection circuit for a semiconductor switching element.

JP2000 115999 A discloses a power-supply control apparatus, comprising: a rectifying circuit having a switching element, which receives an AC current from an AC power supply via a reactor and converts into a rectified current; a smoothing output circuit which receives the rectified current outputted from the rectifying circuit, and forms an output to a DC load; an input voltage detection part which detects an instantaneous voltage of an input voltage from the AC power supply, and which forms input voltage detection information including polarity information about the input voltage on the basis of the detected instantaneous voltage, and outputs the input voltage detection information; an input current detection part which has a current transformer that detects an input current from the AC power supply; an output voltage detection part which detects a terminal voltage of the smoothing output circuit connected to the output of the rectifying circuit, and which outputs output voltage detection information; a control circuit to which the input voltage detection information, the input current detection information, and the output voltage detection information are inputted, and which outputs a driving command signal which is for performing ON/OFF operation of the switching element so that the rectified current outputted from the rectifying circuit becomes a sine-wave rectified waveform having the same phase as the input voltage.

Disclosure of Invention

In the configuration of the conventional heat pump apparatus shown in Fig. 10, the time ratios of the ON times of the switching elements 104 and 105 are controlled on the basis of the AC input current value detected by the current sensor 103. However, the current sensor (current transformer) 103 cannot accurately measure an instantaneous current; and therefore, as a result, the AC input current containing distortion cannot be accurately detected.

Therefore, it is difficult to obtain a high power factor by the control based on the AC input current value detected by the current sensor 103. Furthermore, there is a problem in that when the two switching elements 104 and 105 in the input current control circuit of the AC/DC conversion circuit 106 become ON states at the same time due to noise or the like, the current sensor 103 provided in the closed circuit composed of the AC power supply 101, reactor 102, and switching elements 104 and 105 cannot respond and, consequently, the apparatus has a breakdown.

Consequently, in order to obtain a higher power factor, it is conceivable to use a hall sensor which has small influence of distortion and high current detection accuracy. However, a special circuit which is for compensating temperature characteristics or the like is required to use the hall sensor; and therefore, there is a problem in that it becomes a complicated and expensive circuit configuration. Further, if, in the case where the heat pump apparatus is configured by a current detection mechanism using a hall sensor, there is a problem in that electric power consumption of a driving circuit of the hall sensor increases when it is tried to enhance response speed so as to be able to correspond rapidly to overcurrent protection or the like.

The present invention is to solve problems in the aforementioned conventional heat pump apparatus, and an object of the present invention is to provide a power-supply control apparatus which can obtain a high power factor output in which distortion is small and harmonics are considerably reduced and can surely prevent to generate overcurrent due to a short-circuit fault or the like by correctly detecting an AC input current by a simple configuration, and by forming the input current to a sine-wave shaped output current with low losses; and to provide an energy saving heat pump apparatus with high efficiency and high reliability.

According to the present invention this object is accomplished by a power-supply control apparatus as set out in the appended claims.

In the thus configured power-supply control apparatus of the first aspect of the present invention, it becomes possible to detect even in the case where the switching element malfunctions and the an excessive current flows to the AC power supply side, and it also becomes possible to

detect in the case where a short-circuit current on the DC power supply side flows. In the power-supply control apparatus of the first aspect, the current transformer is used as current detection means on the AC power supply side. In the current transformer, if the rise of the input current is rapid, sensitivity becomes high and output becomes large; and therefore, detection of the abnormal input current of the AC power supply based on the output of the current transformer can prevent the current from further increasing due to a time delay till being interrupted. As a result, the interrupting operation is performed on the basis of the output from the current transformer; and accordingly, circuit protection can be surely performed, and it becomes possible to use a current to the limit of the switching element.

In a power-supply control apparatus of a second aspect according-to the present invention, the breaking circuit interrupts the driving command signal to be inputted to the rectifying circuit from the control circuit by judging that an operation of the rectifying circuit is abnormal when the instantaneous value of the rectified current detected at the rectified current detection part of the first aspect exceeds a previously determined abnormal rectified current threshold. The thus configured power-supply control apparatus of the second aspect becomes a high reliability device which can surely prevent from occurring of an overcurrent due to a short-circuit fault or the like. Furthermore, in the power-supply control apparatus of the second aspect, the input current from the AC power supply can be detected by detecting a current to be inputted to the smoothing output circuit from the rectifying circuit by the rectified current detection part; and therefore, highly accurate control can be performed so that the input current from the AC power supply is a sine-wave shape by adjusting the on-duty ratio of the switching element. As a result, according to the power-supply control apparatus of the second aspect, it becomes possible to considerably increase a use efficiency of the AC power supply.

In a power-supply control apparatus of a third aspect according to the present invention, the breaking circuit interrupts the driving command signal to be inputted to the rectifying circuit from the control circuit by judging that a load on the DC side is abnormal when an output voltage of the smoothing output circuit detected at the output voltage detection part of the first or the second aspect exceeds a previously determined abnormal output voltage threshold. The thus configured power-supply control apparatus of the third aspect can surely prevent from occurring of a circuit fault due to an excessive voltage.

In a power-supply control apparatus of a fourth aspect according to the present invention, there is provided a sample-and-hold circuit which performs sample-and-hold operation of the rectified current from the rectifying circuit on the basis of the driving command signal which is for performing ON/OFF operation of the switching element of the first or the second aspect, the sample-and-hold circuit reproduces an input current waveform, and the control circuit adjusts an ON period of the driving command signal on the basis of the reproduced input current waveform. The thus configured power-supply control apparatus of the fourth aspect forms the input current to a sine-wave shaped output current with low loss; and consequently, a high power factor output in which distortion is small and harmonics are considerably reduced can be obtained.

In a power-supply control apparatus of a fifth aspect according to the present invention, the rectifying circuit of the first or second aspect is constituted by a bidirectional switching circuit and a diode bridge, the bidirectional switching circuit being connected in a short-circuitable way via the AC power supply and the reactor, and the rectified current from the rectifying circuit being a sine-wave rectified waveform having the same phase as the input voltage of the AC power supply by performing ON/OFF driving of the bidirectional switching circuit without detecting polarity of the AC voltage of the AC power supply. The thus configured power-supply control apparatus of the fifth aspect forms the input current to a sine-wave shaped output current with low loss; and consequently, a high power factor output in which distortion is small and harmonics are considerably reduced can be obtained.

The present invention provides a power-supply control apparatus according to claim 1. Preferred embodiments are defined in the dependent claims. The present invention will be more clearly understood and evaluated from the following detailed description when taken in connection with the accompanying drawings together with other objects and features.

A power-supply control apparatus according to the present invention can form a high power factor output in which harmonics are considerably reduced by forming an AC input current to a sine-wave shaped output current with low loss on the basis of a detected AC input current and output current. Furthermore, a heat pump apparatus having the power-supply control apparatus of the present invention becomes an apparatus which has high safety, reliability, and efficiency. Therefore, the power-supply control apparatus and the heat pump apparatus according to the present invention can considerably enhance a power factor of a power supply, that is, a use efficiency of the power supply with a simple configuration; and therefore, it becomes possible to obtain a larger electric power than from the same power supply as that formerly used and to construct an energy saving power supply system.

Brief Description of Drawings

Fig. 1 is a circuit diagram showing, partially in block form, a configuration of a power-supply control apparatus of an embodiment 1 according to the present invention;

Fig. 2 is a block diagram showing a configuration of the power-supply control apparatus of the embodiment 1;

Fig. 3A is a waveform diagram showing an example of an input current in the power-supply control apparatus of the embodiment 1;

Fig. 3B is a waveform diagram showing an example of output characteristics of a current transformer for use in the power-supply control apparatus of the embodiment 1;

Fig. 3C is a waveform diagram showing an example of output characteristics of a second absolute value detection circuit in the power-supply control apparatus of the embodiment 1;

Fig. 4 is a view for explaining an advantage obtained by using characteristics of the current transformer in the power-supply control apparatus of the embodiment 1;

Fig. 5 is a circuit diagram showing, partially in block form, a configuration of a power-supply control apparatus of an embodiment 2 according to the present invention;

Fig. 6 is an input current waveform diagram and a rectified current waveform diagram in the power-supply control apparatus of the embodiment 2;

Fig. 7 is a circuit diagram showing, partially in block form, a configuration of a power-supply control apparatus of an embodiment 3 according to the present invention;

Fig. 8 is a circuit diagram showing, partially in block form, a configuration of a power-supply control apparatus of an embodiment 4 according to the present invention;

Fig. 9 shows circuit diagrams of bidirectional switching circuits for use in the power-supply control apparatus of the embodiment 4; and

Fig. 10 is the schematic circuit diagram showing the conventional heat pump apparatus.

Best Mode for Carrying Out the Invention

Hereinafter, preferred embodiments according to the present invention will be described with reference to the accompanying drawings. In addition, the present invention is not limited to configurations of embodiments to be described below; but, the embodiments to be described below are one specific example to implement the present invention, and it is to be clearly understood that configurations based on the same technical idea are included in the present invention.

(Embodiment 1)

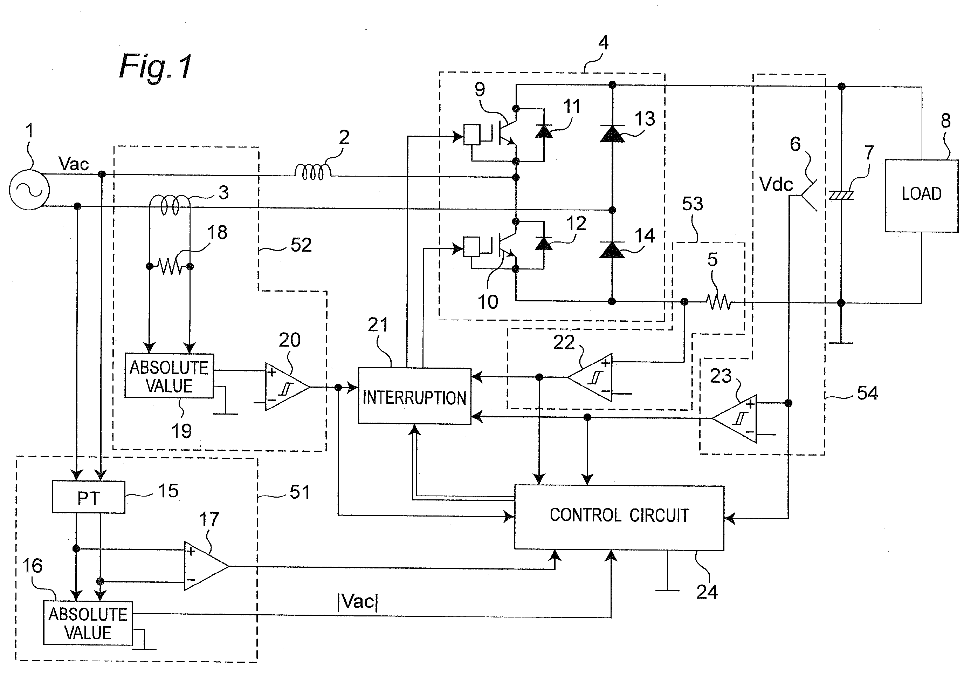

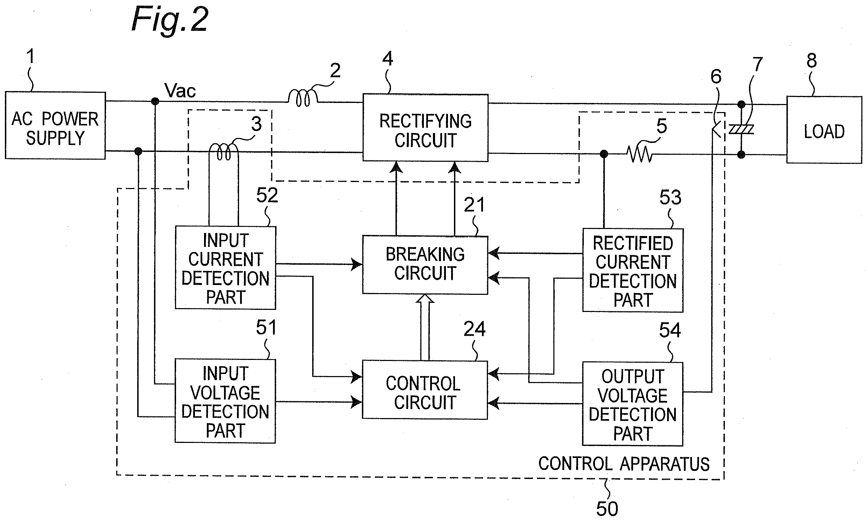

Fig. 1 is a circuit diagram showing, partially in block form, a configuration of a power-supply control apparatus of an embodiment 1 according to the present invention. Fig. 2 is a block diagram showing a configuration of the power-supply control apparatus of the embodiment 1.

In the power-supply control apparatus of the embodiment 1 shown in Fig. 1, an AC power supply 1 is connected to a full wave rectifying circuit 4 serving as a rectifying circuit via a reactor 2, and the AC power supply 1, reactor 2, and full wave rectifying circuit 4 constitute a closed circuit. The full wave rectifying circuit 4 is composed of two switching elements (IGBT) 9 and 10, and four diodes 11, 12, 13, and 14. The first switching element 9 and second switching element 10 are connected in series, and one end of the reactor 2 is connected to a connection point (node) thereof. The other end of the reactor 2 is connected to one output end of the AC power supply 1. The first diode 11 and second diode 12 are connected in parallel to the first switching element 9 and second switching element 10, respectively; so that a reverse direction current is flown therethrough. Furthermore, the third diode 13 and fourth diode 14 are connected in series, and the other output end of the AC power supply 1 is connected to a node thereof.

In the thus configured full wave rectifying circuit 4, the first switching element 9 and first diode 11 are connected in parallel; and the second switching element 10 and second diode 12 are connected in parallel; and the respective parallel connections are connected in series and one arm circuit is constituted. Furthermore, the third diode 13 and fourth diode 14 are connected in series to constitute one arm circuit. Then, in the full wave rectifying circuit 4, a bridge arm circuit is constituted by the two arm circuits.

As described above, the parallel connection of the first switching element 9 and first diode 11 and the parallel connection of the second switching element 10 and second diode 12 are connected in series to constitute a first arm circuit; and a second arm circuit is constituted by the series connection of the third diode 13 and fourth diode 14. In the embodiment 1, the full wave rectifying circuit 4 is constituted by the bridge arm circuit composed of the first arm circuit and second arm circuit. An output of the full wave rectifying circuit 4 is smoothed by repeating of charging and discharging by a smoothing capacitor 7 that is a smoothing output circuit; and a DC electric power is inputted to a DC load 8.

The thus configured power supply control circuit is provided with a control apparatus 50 (see Fig. 2) including a control circuit 24.

As shown in the block diagram in Fig. 2, in addition to the control circuit 24, the control apparatus 50 includes an input voltage detection part 51 which detects an instantaneous voltage of an input voltage from the AC power supply 1, an input current detection part 52 which detects an absolute value of an input current from the AC power supply 1, a rectified current detection part 53 which detects a rectified current flowing between the full wave rectifying circuit 4 and smoothing capacitor 7, an output voltage detection part 54 which detects a terminal voltage of the smoothing capacitor 7, and a breaking circuit 21. The breaking circuit 21 is configured so as to interrupt a driving command signal to the switching elements 9 and 10 of the full wave rectifying circuit 4 from the control circuit 24 on the basis of respective detection signals from the input current detection part 52, rectified current detection part 53, and output voltage detection part 54.

The input voltage detection part 51 (see Fig. 2) has a pulse transformer (PT) 15 which detects an instantaneous voltage (Vac) of the input voltage of the AC power supply 1, a first absolute value detection circuit 16 which detects an absolute value (|Vac|) of the instantaneous voltage of the input voltage on the basis of an output of the pulse transformer 15, and a first comparison circuit 17 which detects polarity of the input voltage on the basis of output of the pulse transformer 15. The absolute value of the instantaneous voltage of the input voltage detected by the first absolute value detection circuit 16 and information showing the polarity of the input voltage detected by the first comparison circuit 17 are inputted to the control circuit 24.

The input current detection part 52 (see Fig. 2) has a current transformer (CT) 3 which detects the input current of the AC power supply 1, a resistor 18 which converts a detection current detected by the current transformer 3 into a detection voltage proportional to the input current, a second absolute value detection circuit 19 which detects an absolute value of the detection voltage, and a second comparison circuit 20 which detects whether or not the detection voltage subjected to the absolute value processing is not lower than a previously determined predetermined value. The second comparison circuit 20 inputs information (interrupting signal) showing a comparison result between the detection voltage subjected to the absolute value processing and the predetermined value to the breaking circuit 21 and the control circuit 24. In the breaking circuit 21, if the detection voltage subjected to the absolute value processing is not lower than the predetermined value, the driving command signal to the switching elements 9 and 10 of the full wave rectifying circuit 4 from the control circuit 24 are interrupted.

The rectified current detection part 53 (see Fig. 2) has a resistor 5 provided between the full wave rectifying circuit 4 and the smoothing capacitor 7, and a third comparison circuit 22 which compares the current (rectified current) flowing between the full wave rectifying circuit 4 and the smoothing capacitor 7 with a previously determined predetermined value (abnormal rectified current threshold). The third comparison circuit 22 inputs information (interrupting signal) showing a comparison result of the rectified current flowing between the full wave rectifying circuit 4 and the smoothing capacitor 7 and the predetermined value (abnormal rectified current threshold) to the breaking circuit 21 and the control circuit 24. If the rectified current is a current not lower than the predetermined value (abnormal rectified current threshold), the third comparison circuit 22 inputs the interrupting signal to the breaking circuit 21; and the breaking circuit 21 interrupts the driving command signal to the switching elements 9 and 10 of the full wave rectifying circuit 4 from the control circuit 24.

The output voltage detection part 54 (see Fig. 2) has a DC voltage detector 6 that is DC voltage detection means which detects the terminal voltage of the smoothing capacitor 7, and a fourth comparison circuit 23 which compares the detected terminal voltage of the smoothing capacitor 7 with a previously determined predetermined value (abnormal output voltage threshold). The fourth comparison circuit 23 inputs information (interrupting signal) showing a comparison result of the terminal voltage of the smoothing capacitor 7 and the predetermined value (abnormal output voltage threshold) to the breaking circuit 21 and the control circuit 24. If the terminal voltage of the smoothing capacitor 7 is not lower than the predetermined value (abnormal output voltage threshold), the fourth comparison circuit 23 inputs the interrupting signal to the breaking circuit 21, and the breaking circuit 21 interrupts the driving command signal to the switching elements 9 and 10 of the full wave rectifying circuit 4 from the control circuit 24.

An operation of the thus configured power-supply control apparatus of the embodiment 1 will be described.

In the power-supply control apparatus of the embodiment 1, when the DC load 8 is connected and driven, electric power supplied from the AC power supply 1 is supplied via the reactor 2 to the full wave rectifying circuit 4 which is constituted by the bridge arm circuit having the first switching element 9 and the second switching element 10.

In the power-supply control apparatus of the embodiment 1, an instantaneous voltage of an input voltage from the AC power supply 1 is detected by the pulse transformer 15, and polarity of the input voltage is detected at the first comparison circuit 17. Furthermore, an absolute value |Vac| of the instantaneous voltage of the input voltage is detected by inputting an output of the pulse transformer 15 to the first absolute value detection circuit 16. Polarity information and absolute value information related to the input voltage are inputted to the control circuit 24.

In the power-supply control apparatus of the embodiment 1, the control circuit 24 performs driving control of the switching elements 9 and 10 in the full wave rectifying circuit 4 on the basis of the information related to the input voltage of the AC power supply 1 detected by the input voltage detection part 51 having the pulse transformer 15, first absolute value detection circuit 16, and first comparison circuit 17.

As shown in Fig. 1, the AC power supply 1 applies an AC voltage to the node between the first switching element 9 and second switching element 10 and to the node between the third diode 13 and fourth diode 14 via the reactor 2. An input current inputted from the AC power supply 1 is formed to a sine-wave output current by performing ON/OFF driving of the first switching element 9 and second switching element 10 in a complementary manner by a driving command signal from the control circuit 24. As a result, a rectified current rectified from the full wave rectifying circuit 4 becomes a substantially mountain-shaped waveform in which a sine-wave is rectified in substantially the same phase as the input voltage. In the power-supply control apparatus of the embodiment 1, the reactor 3 performs accumulation and release of energy by ON/OFF driving of the first switching element 9 and second switching element 10; and consequently, the rectified current having sine-wave is formed. As described above, in the power-supply control apparatus of the embodiment 1, ON/OFF driving of the first switching element 9 and second switching element 10 is performed so that the current to be outputted becomes a sine-wave having the same phase as the input voltage; and therefore, harmonics are reduced and a power factor is considerably improved.

In the power-supply control apparatus of the embodiment 1, ON/OFF driving of the first switching element 9 and second switching element 10 is performed by the control circuit 24 so that the input current becomes the sine-wave current on the basis of the information from the input voltage detection part 51. In addition, in the ON/OFF driving, an on-duty ratio (the ratio of ON time at one cycle) D of the first switching element 9 and second switching element 10 is set in response to the input voltage detected by the control circuit 24. In the case where the input voltage is high, the ratio of ON time is increased; and in the case where the input voltage is low, the ratio of ON time is reduced. As described above, ON/OFF driving of the first switching element 9 and second switching element 10 is performed in response to the input voltage; and accordingly, the input current is formed to the sine-wave current, a power factor is improved, and harmonics are reduced.

Next, an operation of setting the on-duty ratio D in the control circuit 24 will be described. In addition, "on-duty ratio D" represents a time ratio of an ON period in one cycle made up of an ON period and an OFF period in the ON/OFF operation of the switching elements 9 and 10.

When a desired output voltage to be outputted from the power-supply control apparatus is set to Vdc* and an absolute value of an instantaneous voltage Vac of an output voltage that is an output of the first absolute value detection circuit 16 is set to |Vac|, the on-duty ratio D to be set at the control circuit 24 is expressed by the following equation (1).

$$(1-D) \times Vdc* = |Vac| \qquad\qquad (1)$$

Therefore, the on-duty ratio D is determined by the desired output voltage Vdc* and the instantaneous voltage Vac of the input voltage.

In the control circuit 24, the ON/OFF driving of the switching elements 9 and 10 is performed in a complementary manner on the basis of polarity information of the input voltage obtained by the first comparison circuit 17 by the on-duty ratio D determined by the equation (1).

Input signal allocation to the first switching element 9 or second switching element 10 by the on-duty ratio D in the control circuit 24 is as follows: By using the polarity information of the input voltage obtained by the first comparison circuit 17, in the case where the voltage on the reactor 2 side (upper side input terminal shown in Fig. 1) of the AC power supply 1, ON/OFF driving of the second switching element 10 (lower side switching element in the arm circuit shown in Fig. 1) is performed. On the other hand, in the case where the voltage on the opposite side of the AC power supply 1 (lower side input terminal shown in Fig. 1), ON/OFF driving of the first switching element 9 (upper side switching element in the arm circuit shown in Fig. 1) is performed. As described above, the ON/OFF driving of the first switching element 9 or the second switching element 10 is performed; and accordingly, the input current from the AC power supply 1 is formed to a rectified current having a substantially mountain-shaped waveform in which a sine-wave is rectified.

In addition, in the case where accuracy of the desired output voltage to be outputted Vdc* is further enhanced, it becomes possible by using an actual output voltage Vdc obtained by the DC voltage detector 6. In the power-supply control apparatus of the embodiment 1, it is possible to configure so as to compare the actual output voltage Vdc with the previously set desired output voltage Vdc* by providing the comparison circuit in the output voltage detection part 54. In the output voltage detection part 54, a certain minimal increment is added to the on-duty ratio D in the case where the detected actual output voltage Vdc is lower than the desired output voltage Vdc*. On the other hand, in the case where the detected actual output voltage Vdc is higher than the desired output voltage Vdc*, a certain minimal value is subtracted from the on-duty ratio D. That is, a coefficient K is minutely modified by the following equation (2).

$$(1-K \times D) \times Vdc* = |Vac| \qquad\qquad (2)$$

In the equation (2), an initial value of the coefficient K is 1, for example, there may be implemented a method in which the value of the coefficient K is changed by every 0.1 in response to a difference between the actual output voltage Vdc detected every 1 sec and the desired output voltage Vdc*.

The detected actual output voltage Vdc is gradually approached to the desired output voltage Vdc* by changing the coefficient K as described above. As a result, the power-supply control apparatus of the embodiment 1 can further improve the accuracy of the output voltage. Besides, in addition to the method of performing fine adjustment of the coefficient K, it is to be understood that there can be a method which determines the coefficient K by performing an arithmetic process such as proportion and integration on the basis of the difference between the detected actual output voltage Vdc and the desired output voltage Vdc*.

As described above, the power-supply control apparatus of the embodiment 1 can further highly accurately control the switching elements (IGBT) 9 and 10 on the basis of various kinds of information from the input voltage detection part 51 and output voltage detection part 54; and therefore, a use efficiency (power factor) of the AC power supply 1 can be considerably improved.

In the power-supply control apparatus of the embodiment 1, there is provided the breaking circuit 21 which is for stopping ON/OFF control of the first switching element 9 and second switching element 10 in the case of occurrence of an abnormal state in the input from the AC power supply 1, or in the case of occurrence of an abnormal state in the circuits inside the power-supply control apparatus, and in the case of occurrence of an abnormal state in the DC load 8. When the ON/OFF driving of the first switching element 9 and second switching element 10 is stopped by the breaking circuit 21, the power-supply control apparatus surely stops an output of the desired level to be supplied to the DC load 8.

Next, an operation at the occurrence of an abnormal state in the power-supply control apparatus of the embodiment 1 will be described. Hereinafter, the operation at the occurrence of an abnormal state of the input current detection part 52, rectified current detection part 53, and output voltage detection part 54 in the power-supply control apparatus of the embodiment 1 will be described one after another.

[Input Current Detection Unit 52]

The current transformer 3 provided between the AC power supply 1 and full wave rectifying circuit 4 detects an input current from the AC power supply 1 to convert to a detection voltage corresponding to the input current detected by the resistor 18. The detection voltage is inputted to the second absolute value detection circuit 19 to detect an absolute value of the detection voltage, and is inputted to the second comparison circuit 20. In the second comparison circuit 20, the absolute value of the detection voltage corresponding to the input current detected by the current transformer 103 is compared with a previously determined predetermined value (abnormal input current threshold). Information (interrupting signal) showing a comparison result thereof is inputted to the breaking circuit 21 and the control circuit 24. If the absolute value of the detection voltage is not lower than the abnormal input current threshold, the breaking circuit 21 instantaneously interrupts the driving command signal inputted to the switching elements 9 and 10 of the full wave rectifying circuit 4 from the control circuit 24.

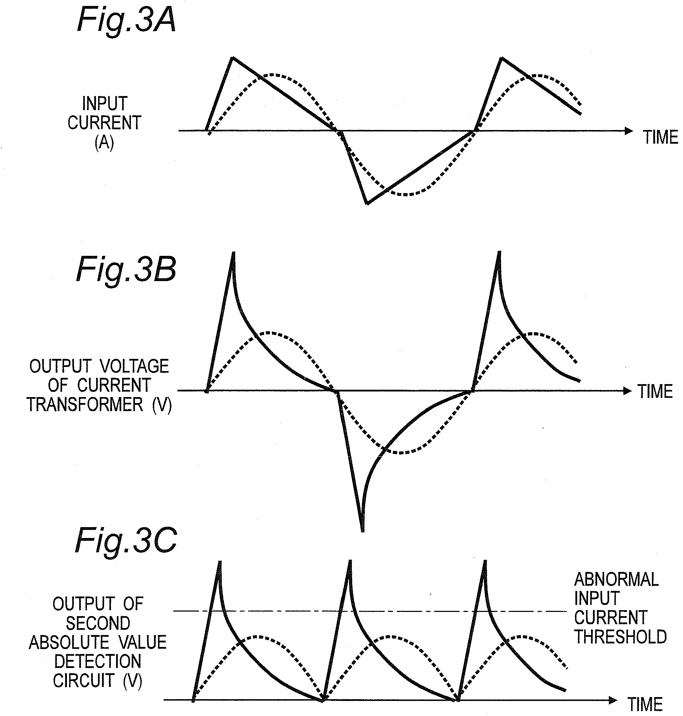

Figs. 3A, 3B, and 3C are waveform diagrams showing an example of output characteristics of the current transformer 3 for use in the power-supply control apparatus of the embodiment 1. Fig. 3A is an input current waveform detected by the current transformer 3; Fig. 3B is an output voltage waveform of the current transformer 3; and Fig. 3C is a voltage waveform outputted from the second absolute value detection circuit 19.

In the case where a clear sine-wave input current as shown by a dashed line in Fig. 3A is detected by the current transformer 3, the current transformer 3 outputs a clear sine-wave output voltage waveform as shown by a dashed line in Fig. 3B. In this case, the second absolute value detection circuit 19 outputs a clear sine-wave voltage as shown by a dashed line in Fig. 3C.

In the case where the input current from the AC power supply 1 has a waveform whose rise is rapid, for example, an input current waveform having a portion where the rise is rapid, for example, as shown by a solid line in Fig. 3A is detected by the current transformer 3, the output voltage of the current transformer 3 becomes a steep voltage waveform in which the portion where the rise of the input current is rapid is further emphasized. Therefore, amplitude of the voltage waveform outputted from the current transformer 3 becomes large. If such output voltage of the current transformer 3 is inputted to the second absolute value detection circuit 19, a voltage waveform as shown by a solid line in Fig. 3C is made, and a voltage of the voltage waveform is inputted from the second absolute value detection circuit 19 to the second comparison circuit 20.

As is apparent from the voltage waveform (waveform shown by the solid line in Fig. 3C) outputted from the second absolute value detection circuit 19, in the case of the waveform in which the rise of the input current is rapid, the waveform detected by the current transformer 3 becomes the voltage waveform with large amplitude in which the portion where the rise of the input current is rapid is further emphasized. Therefore, it becomes possible to detect before the input current having the waveform whose rise is rapid becomes an abnormally large input current by detecting whether or not the output of the second absolute value detection circuit 19 shown in Fig. 3C exceeds the predetermined value. That is, the input current detection part 52 having the current transformer 3 judges that it is abnormal before an actual input current becomes an abnormally large input current, and it becomes possible to interrupt the driving command signal to the switching elements 9 and 10 by the breaking circuit 21.

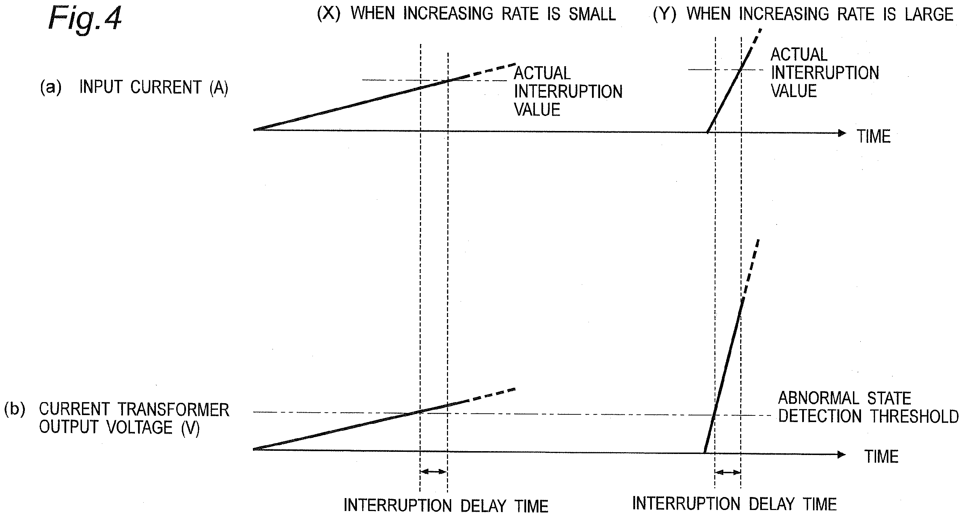

The power-supply control apparatus of the embodiment 1 uses characteristics in which the current transformer 3 further emphasizes the rapid portion to enhance sensitivity when the current transformer 3 detects the current waveform whose rise is rapid. Fig. 4 is a view for explaining advantages obtained by using the characteristics of the current transformer 3. A part (a) of Fig. 4 shows a waveform (X) in the case where a rise angle of the input current is small, and a waveform (Y) in the case where the rise angle is large. A part (b) of Fig. 4 shows voltage waveforms outputted from the current transformer 3, the waveform (X) shows an output voltage waveform of the current transformer 3 in the case where the rise angle of the input current is small, and the waveform (Y) shows an output voltage waveform of the current transformer 3 in the case where the rise angle of the input current is large.

There exists a delay time from the input current detection part 52 detects that the input current is an abnormal current till the breaking circuit 21 interrupts the driving command signal to the switching elements 9 and 10. The input current abnormally increases during the delay time and consequently elements and equipment are likely to be destroyed. More particularly, there is a case which becomes a large current during the delay time and causes a large fault in the case where the rise of the input current is rapid. In order to prevent such fault, the power-supply control apparatus of the embodiment 1 uses the aforementioned characteristics of the aforementioned current transformer 3, the characteristics being high in sensitivity when the input is rapidly changed.

As is apparent from the parts (a) and (b) of Fig. 4, in the current transformer 3, the larger the rise angle of the input current is, that is, the larger an increasing rate of the current is, the steeper the output voltage waveform of the current transformer 3 is. As shown in the part (b) of Fig. 4, in the power-supply control apparatus of the embodiment 1, the switching elements 9 and 10 are in OFF states by using the breaking circuit 21 at the time when the output voltage of the current transformer 3 exceeds the abnormal input current threshold that is the previously set predetermined value. As described above, a certain level of time passes till being actually interrupted from judging that the input current is abnormal; and therefore, in the case where the rise angle is steep, there is a possibility that the current is further increased during the time pass and exceeds a limiting current of the switching elements 9 and 10. However, in the power-supply control apparatus of the embodiment 1, the input current is detected by using the current transformer 3 whose sensibility increases when a change in detection current is rapid; and therefore, as shown in the aforementioned Figs. 3A to 3C, it is possible to judge that it is abnormal at a value lower than the actual input current in the case where the rise of the input current is rapid.

When the current is actually interrupted, the power-supply control apparatus of the embodiment 1 is configured to surely interrupt without exceeding the limiting current of the switching elements 9 and 10. Therefore, the power-supply control apparatus of the embodiment 1 according to the present invention has excellent effects in that limiting current values of the switching elements 9 and 10 can be used in just proportion and it is not necessary to use the switching elements 9 and 10 having a current capacity larger than necessary. Then, the current transformer 3 for use in the power-supply control apparatus of the embodiment 1 according to the present invention has characteristics which do not cause a circuit loss; and therefore, the power-supply control apparatus has high efficiency. Furthermore, the power-supply control apparatus of the embodiment 1 does not use detection means such as a hall sensor for the purpose of detection of the input current; and therefore, there are advantages in that it has small influence of environmental temperature or the like and the circuit can be simplified.

As described above, in the power-supply control apparatus of the embodiment 1, when the current transformer 3 serving as input current detection means in the input current detection part 52 detects an abnormality of the input current, the breaking circuit 21 surely interrupts the driving command signal to be inputted to the switching elements 9 and 10; and consequently, safety and reliability of the apparatus are enhanced.

[Rectified Current Detection Unit 53]

Furthermore, when the rectified current detection part 53 having the resistor 5 provided between the full wave rectifying circuit 4 and the smoothing capacitor 7 detects an abnormal state, the power-supply control apparatus of the embodiment 1 is configured to interrupt the driving command signal to be inputted to the switching elements 9 and 10. The rectified current detection part 53 detects a rectified current flowing between the full wave rectifying circuit 4 and the smoothing capacitor 7. The rectified current detection part 53 inputs rectified current information in which a voltage is dropped across the resistor 5 to the third comparison circuit 22. The third comparison circuit 22 detects whether or not the detected rectified current is not lower than a predetermined value (abnormal rectified current threshold). Information (interrupting signal) showing a comparison result in the third comparison circuit 22 is inputted to the breaking circuit 21 and the control circuit 24. If the detected rectified current is not lower than the abnormal rectified current threshold, the breaking circuit 21 interrupts the driving command signal to the switching elements 9 and 10 of the full wave rectifying circuit 4 from the control circuit 24.

[Output Voltage Detection Unit 54]

Further, when the output voltage detection part 54 which detects a terminal voltage of the smoothing capacitor 7 detects an abnormal state, the power-supply control apparatus of the embodiment 1 is configured to interrupt the driving command signal to be inputted to the switching elements 9 and 10. In the output voltage detection part 54, the DC voltage detector 6 detects the terminal voltage of the smoothing capacitor 7 that is an output voltage, and the fourth comparison circuit 23 detects whether or not the detected output voltage is not lower than a predetermined value (abnormal output voltage threshold). Information (interrupting signal) showing a comparison result in the fourth comparison circuit 23 is inputted to the breaking circuit 21 and the control circuit 24. If the detected output voltage is not lower than the abnormal output voltage threshold, the breaking circuit 21 interrupts the driving command signal to the switching elements 9 and 10 of the full wave rectifying circuit 4 from the control circuit 24.

As described above, in the power-supply control apparatus of the embodiment 1, even in any of the states when the current transformer 3 in the input current detection part 52 detects an abnormally large input current value, when the rectified current detection part 53 detects an abnormally large rectified current value, or when the output voltage detection part 54 detects an abnormally large output voltage; the breaking circuit 21 surely interrupts the driving command signal to be inputted to the switching elements 9 and 10 of the full wave rectifying circuit 4 from the control circuit 24.

Consequently, the power-supply control apparatus of the embodiment 1 becomes a high safety apparatus, and reliability of the heat pump apparatus using the power-supply control apparatus can be enhanced.

(Embodiment 2)

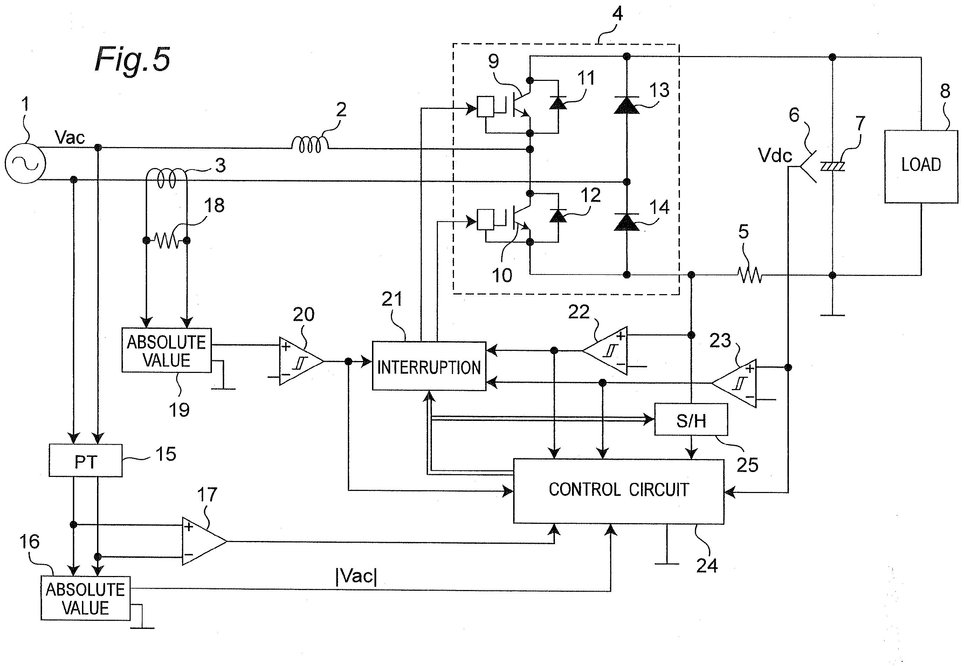

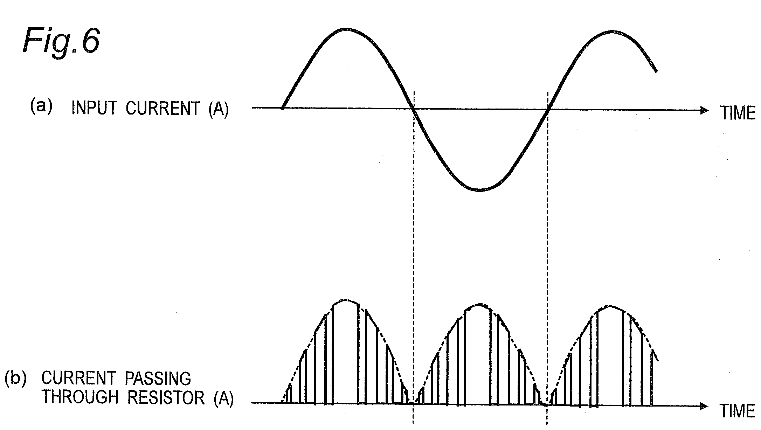

Next, a power-supply control apparatus of an embodiment 2 according to the present invention will be described by using the accompanying Figs. 5 and 6. Fig. 5 is a circuit diagram showing, partially in block form, a configuration of the power-supply control apparatus of the embodiment 2. Fig. 6 is waveform diagrams showing an input current and a rectified current in the power-supply control apparatus of the embodiment 2. In the power-supply control apparatus of the embodiment 2, different points from the aforementioned power-supply control apparatus of the embodiment 1 are that the rectified current flowing from a full wave rectifying circuit 4 to a smoothing capacitor 7 is detected by a resistor 5, and rectified current information showing the detected current value is inputted to a control circuit 24 via a sample-and-hold circuit 25. Therefore, in the description and Fig. 5 of the embodiment 2, the same reference numerals are given to constitutional elements having the same function or configuration as those in the aforementioned power-supply control apparatus of the embodiment 1, and the description of the embodiment 1 will be applied to that of the constitutional elements.

In the power-supply control apparatus of the embodiment 2, an output of the pulse transformer (PT) 15 which detects an input voltage of the AC power supply 1 is inputted to the first absolute value detection circuit 16; and accordingly, absolute value information of an AC voltage is detected at the first absolute value detection circuit 16. The power-supply control apparatus of the embodiment 2 is configured such that the absolute value information of the detected AC voltage is inputted to the control circuit 24, and the input current to the power-supply control apparatus is detected on the basis of the absolute value information of the AC voltage and the rectified current information from the sample-and-hold circuit 25.

An operation of input current detection in the power-supply control apparatus of the embodiment 2 will be described by using Fig. 6. A part (a) of Fig. 6 is the waveform diagram showing the input current inputted from the AC power supply 1. In the part (b) of Fig. 6, a waveform (convex and concave waveform) of an actual rectified current, which is outputted from the full wave rectifying circuit 4 and is flown through the resistor 5 when the input current shown in the part (a) of Fig. 6 is inputted, is shown by a solid line; and a waveform (mountain-shaped waveform) in the case where the input current is directly full wave rectified is shown by a dashed line.

As shown in the part (b) of Fig. 6, an envelope of the current flowing through the resistor 5 corresponds to the waveform in the case where the input current shown by the dashed line is full wave rectified. In the rectified current waveform (convex and concave waveform) shown by the solid line in the part (b) Fig. 6, a period (convex period) when the current flows through the resistor 5 is a time when the switching elements 9 and 10 of the power-supply control apparatus shown in Fig. 5 are OFF periods. Sample and hold operation is performed in the sample-and-hold circuit 25 at the OFF period; and accordingly, information of the input current can be obtained and the input current can be reproduced. In the power-supply control apparatus of the embodiment 2, the switching elements 9 and 10 of the full wave rectifying circuit 4 are configured to operate at time-shared ON/OFF periods; and therefore, the input current can be detected by detecting a current value at the OFF period in the rectified current. Then, the sample-and-hold circuit 25 holds current information detected till the next OFF period; and therefore, it becomes possible to reproduce the input current waveform in the control circuit 24 to which the input current information is inputted. Therefore, in the power-supply control apparatus of the embodiment 2, it becomes possible to detect the input current from the rectified current. Consequently, the control circuit 24 performs ON/OFF repetition operation of the switching elements 9 and 10 at a constant cycle to control so that the OFF period does not become zero at the constant cycle.

The power-supply control apparatus of the embodiment 2 uses the detected input current information and controls an on-duty ratio of the switching elements 9 and 10 so that the input current becomes a sine-wave.

The power-supply control apparatus of the embodiment 2 controls the rectified current to the sine-wave current having the same phase as the input voltage, reduces harmonics, and becomes an AC/DC converter with a high power factor. In the control circuit 24, a deviation between an actual output voltage Vdc detected by the DC voltage detector 6 serving as DC voltage detection means and a desired output voltage Vdc* is calculated. A target input current is set by the calculated deviation and amplitude information of absolute value information of the input voltage of the AC power supply 1. A deviation between the target input current and the input current detected from the rectified current is obtained, and the on-duty ratio of the switching elements 9 and 10 is adjusted so as to reduce the deviation. As described above, the power-supply control apparatus of the embodiment 2 uses the operating principle of the high power factor converter.

In the thus configured and operated power-supply control apparatus of the embodiment 2, it becomes possible to make the rectified current further close to a sine-wave having the same phase as the input voltage and it becomes possible to extremely increase a power factor of the power supply and to use electric power to the limit of the power supply's capacity, in addition to the effects of the aforementioned power-supply control apparatus of the embodiment 1.

(Embodiment 3)

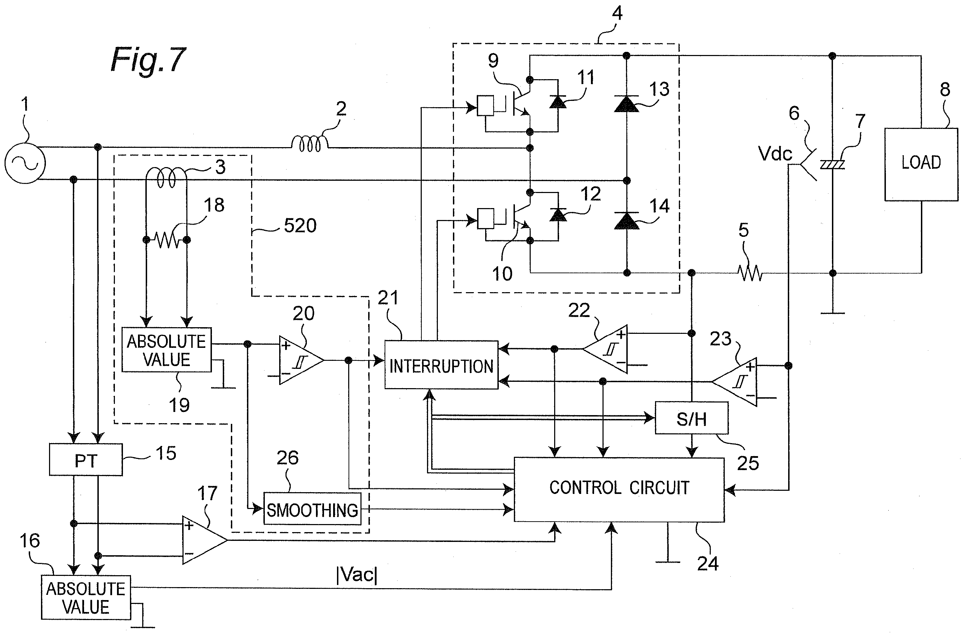

Next, a power-supply control apparatus and a heat pump apparatus of an embodiment 3 according to the present invention will be described by using the accompanying Fig. 7. Fig. 7 is a circuit diagram showing, partially in block form, a configuration of the power-supply control apparatus of the embodiment 3. There are different points from the aforementioned power-supply control apparatus of the embodiment 2 in that the power-supply control apparatus of the embodiment 3 is configured such that a smoothing circuit 26 is further provided, an output of a second absolute value detection circuit 19 is smoothed (averaged) at the smoothing circuit 26, and its average value information is inputted to a control circuit 24. As described above, in the power-supply control apparatus of the embodiment 3, a signal showing an absolute value of an output of the current transformer 3 is inputted to the smoothing circuit 26 to be smoothed and to detect an average value of an input current. The average value information of the detected input current is inputted to the control circuit 24. Therefore, in the description and Fig. 7 of the embodiment 3, the same reference numerals are given to constitutional elements having the same function or configuration as those in the aforementioned power-supply control apparatus of the embodiments 1 and 2, and the description of the embodiments 1 and 2 will be applied to that of the constitutional elements.

The DC load 8 to which electric power is supplied by the power-supply control apparatus of the embodiment 3 is specifically a circuit which drives a motor of a compressor for compressing working fluid. When the number of rotation of the compressor motor is increased, a performance of the heat pump apparatus is increased; and it becomes possible to purvey a much more thermal demand. However, when operation environment such as environmental temperature of the heat pump apparatus is different, it does not become the same performance and the same electric power consumption even when the same compressor motor is driven at the number of rotation. More particularly, when the environmental temperature increases, a pressure of the working fluid increases; and when the same compressor motor is tried to be driven at the same number of rotation, the electric power consumption rapidly increases. Therefore, the power-supply control apparatus of the embodiment 3 monitors the input current in order to detect a rapid increase in electric power consumption; and, in the case where the input current rapidly increases and there is a possibility which exceeds an acceptable value assumed as the heat pump apparatus, system control is performed such that, for example, the number of rotation of the compressor motor is reduced or a supply of electric power to the compressor motor is stopped.

The power-supply control apparatus of the embodiment 3 uses the input current detected by current transformer 3 in order to detect the rapid increase in electric power consumption. An input current detection part 520 in the power-supply control apparatus of the embodiment 3 has the current transformer 3 which is high in sensitivity (output) when a change in the input current is rapid, the resistor 18 which converts a detection current detected by the current transformer 3 into a detection voltage proportional to the detected input current, the second absolute value detection circuit 19 which detects an absolute value of the detection voltage, and the second comparison circuit 20 which detects whether or not the detection voltage subjected to the absolute value processing is not lower than a previously determined predetermined value, as described in the aforementioned embodiment 1; and has the smoothing circuit 26 in which the detection voltage subjected to the absolute value processing is inputted to smooth (detect an average value). In the case where the average value of the input current is detected at the smoothing circuit 26 and the average value exceeds the previously determined value, system control is performed such that, for example, the number of rotation of the compressor motor is reduced or the supply of electric power to the compressor motor is stopped.

As described above, in the power-supply control apparatus of the embodiment 3, the current transformer 3 is used both as the detection of the input current and the detection of the rapid increase in electric power consumption; and accordingly, a high reliability system with a simple configuration can be constructed without providing new detection means for the system control.

(Embodiment 4)

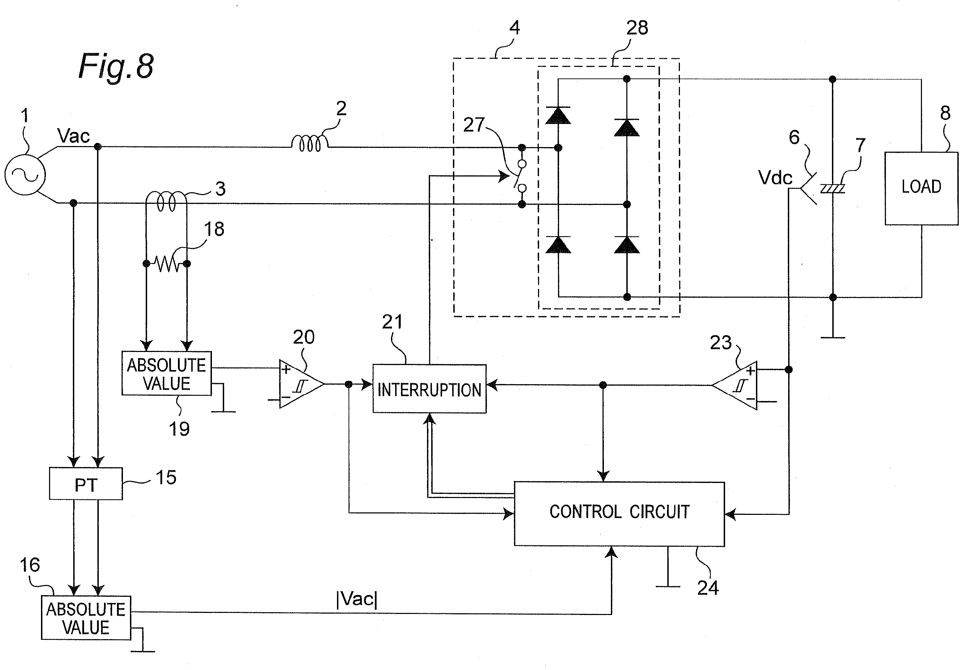

Next, a power-supply control apparatus of an embodiment 4 according to the present invention will be described by using the accompanying Fig. 8. Fig. 8 is a circuit diagram showing, partially in block form, a configuration of the power-supply control apparatus of the embodiment 4. In the power-supply control apparatus of the embodiment 4, different points from the aforementioned power-supply control apparatus of the embodiment 1 are that a bidirectional switching circuit 27 is provided at a former stage portion in the rectifying circuit 4 and a full wave rectifying circuit 28 composed of diodes is provided at a later stage portion. Therefore, in the description and Fig. 8 of the embodiment 4, the same reference numerals are given to constitutional elements having the same function or configuration as those in the aforementioned power-supply control apparatus of the embodiment 1, and the description of the embodiment 1 will be applied to that of the constitutional elements.

In the power-supply control apparatus of the embodiment 4 according to the present invention, an input current of the AC power supply 1 is inputted to the rectifying circuit 4 via the reactor, as in the power-supply control apparatus of the embodiment 1. The rectifying circuit 4 includes the bidirectional switching circuit 27 and the full wave rectifying circuit 28. The full wave rectifying circuit 28 has two diode series circuits connected in parallel, and a diode bridge circuit is constituted by four diodes. An input of the full wave rectifying circuit 28 is smoothed by the smoothing capacitor 7 to supply electric power to the DC load 8.

As shown in Fig. 8, the power-supply control apparatus of the embodiment 4 is provided with one bidirectional switching circuit 27 between the input terminals to the rectifying circuit 4, and the bidirectional switching circuit 27 is controlled by the control circuit 24. A driving command signal to the bidirectional switching circuit 27 from the control circuit 24 is configured to be interrupted by the breaking circuit 21.

Processing contents at the control circuit 24 in the power-supply control apparatus of the embodiment 4 are substantially the same as the aforementioned processing contents of the control circuit 24 of the aforementioned embodiment 1; however, there is a different point in that the processing contents with respect to the switching elements 9 and 10 in the power-supply control apparatus of the embodiment 1 are changed to the processing contents with respect to the bidirectional switching circuit 27. In this regard, however, in the power-supply control apparatus of the embodiment 4, since the bidirectional switching circuit 27 which does not need polarity information is used, the switching elements do not need to be switched depending on the polarity of the input voltage of the AC power supply 1; and consequently, the control circuit is simplified. Furthermore, by the same reason, the circuit which is for detecting the polarity of the input voltage of the AC power supply 1 is not required in the embodiment 4; and consequently, the circuit is simplified.

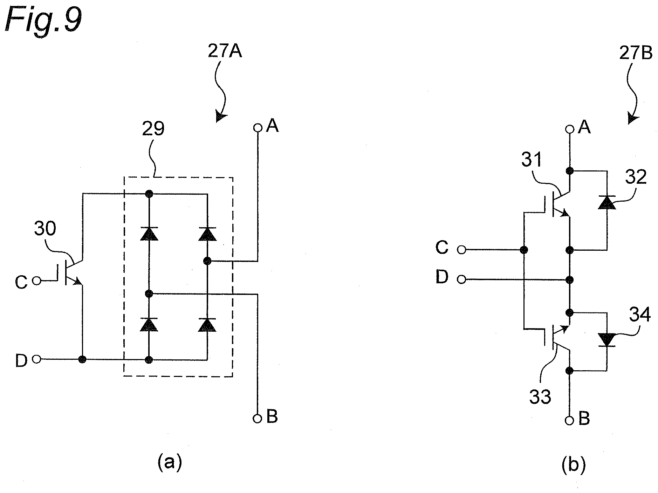

Fig. 9 is a specific example of the bidirectional switching circuit 27 for use in the power-supply control apparatus of the embodiment 4. The part (a) of Fig. 9 shows a bidirectional switching circuit 27A composed of a full wave rectifying circuit 29 and an IGBT 30. The bidirectional switching circuit 27A shown in the part (a) of Fig. 9 is one in which a controllable switching element is achieved by one. The full wave rectifying circuit 29 is configured by a diode bridge circuit composed of four diodes, the diode bridge circuit having two arm circuits connected in parallel, each of the arm circuits being a series body of two diodes serving as one arm circuit. Nodes between the two diodes in the arm circuits are terminals A and B to be connected to the AC power supply 1. Furthermore, a collector terminal of the IGBT 30 is connected to cathode side terminals of the full wave rectifying circuit 29; and an emitter terminal of the IGBT 30 is connected to anode side terminals of the full wave rectifying circuit 29. Further, a terminal D is provided at the anode side terminals of the full wave rectifying circuit 29. It is configured such that the driving command signal from the control circuit 24 is inputted to the control terminal C that is a gate terminal of the IGBT 30; and when not lower than a certain level of a voltage that is a higher potential than a potential at the terminal D is applied to the control terminal C, the IGBT 30 becomes an ON state. As a result, the terminals A and B connected to the AC power supply 1 become the same potential regardless of the polarity of the potential between the terminals. That is, a signal to be inputted to the terminal C of the bidirectional switching circuit 27A is controlled; and accordingly, the bidirectional switching circuit 27A performs ON/OFF operation.

A bidirectional switching circuit 27B shown in the part (b) of Fig. 9 is composed of two IGBTs 31 and 33; and diodes 32 and 34 connected in parallel to the IGBTs 31 and 33, respectively. The IGBT 31 and diode 32 are reversely connected in parallel. That is, a collector terminal of the IGBT 31 and a cathode terminal of the diode 32 are connected: and an emitter terminal of the IGBT 31 and an anode terminal of the diode 32 are connected. On the other hand, the IGBT 33 and diode 34 are reversely connected in parallel; however, the IGBT 31 and IGBT 33 are reversely faced. That is, an emitter terminal of the IGBT 33 and an anode terminal of the diode 34 are connected; and a collector terminal of the IGBT 33 and a cathode terminal of the diode 32 are connected. Then, the emitter terminal of the IGBT 31 and the emitter terminal of the IGBT 33 are connected. Furthermore, a terminal D is provided at a node between the emitter terminal of the IGBT 31 and the emitter terminal of the IGBT 33. As described above, the IGBTs 31 and 33 and the diodes 32 and 34 are connected to constitute the bidirectional switching circuit 27B.

The bidirectional switching circuit 27B shown in the part (b) of Fig. 9 is a configuration in which current-carrying elements during switching are fewer as compared with the bidirectional switching circuit 27A shown in the part (a) of Fig. 9. In the bidirectional switching circuit 27B shown in the part (b) of Fig. 9, when not lower than a certain level of a voltage that is a higher potential than a potential at the terminal D is applied to the control terminal C, the IGBTs 31 and 33 become ON states, as in the bidirectional switching circuit 27A shown in the part (a) of Fig. 9. Therefore, in the case where a potential at the terminal A is higher than that at the terminal B, the terminals A and B become the same potential by the IGBT 31 and diode 34; and therefore, the bidirectional switching circuit 27B performs switching operation. On the other hand, in the case where the potential at the terminal A is lower than that at the terminal B, the terminals A and B become the same potential by the IGBT 33 and diode 32; and therefore, the bidirectional switching circuit 27B performs switching operation. As describe above, the bidirectional switching circuit 27B becomes possible to perform switching operation regardless of a high or a low level in potential of the terminals A and B. As a result, in the control circuit 24 shown in Fig. 8, it becomes possible to perform switching control without knowing the polarity of the AC power supply 1.

As described above, in the power-supply control apparatus of the embodiment 4, a control system which does not need polarity information of the AC power supply 1 can be achieved; and therefore, it becomes possible to simplify the control circuit.

In addition, the power-supply control apparatus of the embodiment 4 is the configuration in which the switching elements 9 and 10 in the power-supply control apparatus of the embodiment 1 are replaced with the bidirectional switching circuit; however, this configuration can also be applied to the configuration of the aforementioned power-supply control apparatus of the embodiment 2 and the configuration of the power-supply control apparatus of the embodiment 3.

In addition, in the description of the aforementioned embodiments 1 to 4, the description is made by the example in which the IGBT is used as the switching element; however, the same effects can be obtained even in the case of a bipolar transistor or a MOSFET.

In the description of the aforementioned embodiments 2 and 3, the description is made by the example in which the sample-and-hold circuit 25 and smoothing circuit 26 are used as a different circuit from the control circuit 24; however, it is possible to achieve even in the case where calculation function of the control circuit 24 is used in place of the function of the sample-and-hold circuit 25 and smoothing circuit 26.

In the full wave rectifying circuit 4 of the aforementioned embodiments 1 to 3, the description is made by the example in which the arm on one side is longitudinally connected (cascaded) by only diodes; however, the same effects can be obtained even in the case where switching elements are longitudinally connected (cascaded).

In the aforementioned embodiment 4, the specific example of the bidirectional switching circuit is described by using Fig. 9; however, it is possible to achieve the bidirectional switching circuit even in the case other than the configuration shown in Fig. 9, for example, a device having a high breakdown voltage in a reverse direction is used.

In the power-supply control apparatus of the present invention, the current transformer is used to detect the input current for the problem in that the input current at the time capable of actually interruption is further increased if a change in the input current is rapid and accordingly the input current exceeds the limiting current of the switching element; and therefore, the power-supply control apparatus is configured such that the more rapid the increase in current is, the higher the detection sensibility becomes; and it becomes possible to quickly judge that the input current should be interrupted. Therefore, according to the present invention, a current value at the time capable of actually interruption can be reduced and it becomes possible to use until near the limiting current of the switching element.

Furthermore, in the power-supply control apparatus of the present invention, the rectified current detection part to the smoothing output circuit is provided between the rectifying circuit and the smoothing output circuit, and the breaking circuit interrupts to drive the switching element when an instantaneous rectified current value detected by the rectified current detection part exceeds a previously determined threshold. In addition, in the power-supply control apparatus of the present invention, the on-duty ratio D of the switching element is determined on the basis of the rectified current value to the smoothing output circuit at the time when the switching element is at an OFF period; and accordingly, the input current at every control cycle of the switching element can be accurately detected. Furthermore, the thus configured power-supply control apparatus of the present invention can achieve control which forms the input current from the AC power supply to a highly accurate sine-wave shape; and consequently, a power factor of the power supply is improved and a use efficiency of the AC power supply is considerably increased.

Further, in the power-supply control apparatus of the present invention, the rectifying circuit is constituted by the diode bridge composed of only diodes and the bidirectional switching circuit irrelevant to the polarity of the input voltage, and the bidirectional switching circuit is connected to the single phase AC power supply via the reactor. A sine-wave shaped output current having the same phase as the input voltage is formed with low loss by the ON/OFF operation of the bidirectional switching circuit; and consequently, a high power factor output in which distortion is small and harmonics are considerably reduced can be obtained. Furthermore, the power-supply control apparatus of the present invention is configured by one switching circuit and polarity discrimination of the input voltage is not required; and therefore, it becomes a simple configuration, and it is possible to reduce in size and manufacturing cost.

The heat pump apparatus of the present invention is a heat pump apparatus using the aforementioned power-supply control apparatus, and detects a load state of the system by using an average value of an absolute value of the current detection means which is high in sensitivity when a change in the input current is rapid. As described above, the heat pump apparatus of the present invention does not need to add new detection means; and in the case where the load is heavy, it becomes possible to perform system control, for example, narrowing the performance of the heat pump apparatus, and it becomes possible to perform broad range and appropriate operation of the heat pump apparatus.

Industrial Applicability

In the power-supply control apparatus according to the present invention, a power factor of a power supply input is improved and harmonics are considerably reduced; and therefore, the present invention is useful for heat pump apparatuses using the power-supply control apparatus, for example, air conditioning equipment such as room air conditioners, refrigerating and freezing equipment such as refrigerators, or various fields such as heat pump type water heaters.

**Claims**

1. A power-supply control apparatus, comprising:

   a rectifying circuit (4) having a switching element, which receives an AC current from an AC power supply (1) via a reactor (2) and converts into a rectified current;
   a smoothing output circuit (7) which receives the rectified current outputted from the rectifying circuit, and forms an output to a DC load;
   an input voltage detection part (51) which detects an instantaneous voltage of an input voltage from the AC power supply, and which forms input voltage detection information including polarity information and absolute value information about the input voltage on the basis of the detected instantaneous voltage, and outputs the input voltage detection information;

an input current detection part (52) which has a current transformer that detects an input current from the AC power supply, and which outputs information indicating an absolute value of a detection voltage proportional to the input current detected by the current transformer;

a rectified current detection part (53) which detects an instantaneous value of the rectified current to be inputted to the smoothing output circuit from the rectifying circuit, and which outputs rectified current detection information;

an output voltage detection part (54) which detects a terminal voltage of the smoothing output circuit connected to the output of the rectifying circuit, and which outputs output voltage detection information;

a control circuit (24) to which the input voltage detection information, the input current detection information, the rectified current detection information, and the output voltage detection information are inputted, and which outputs a driving command signal which is for performing ON/OFF operation of the switching element so that the rectified current outputted from the rectifying circuit becomes a sine-wave rectified waveform having the same phase as the input voltage; and

a breaking circuit (21) which interrupts the driving command signal to be inputted to the rectifying circuit from the control circuit on the basis of the input current detection information, the rectified current detection information, and the output voltage detection information,

the breaking circuit interrupting the driving command signal to be inputted to the rectifying circuit from the control circuit when the input current detection information exceeding a previously determined abnormal input current threshold.

2. The power-supply control apparatus according to claim 1,
wherein the breaking circuit interrupts the driving command signal to be inputted to the rectifying circuit from the control circuit by judging that an operation of the rectifying circuit is abnormal when the instantaneous value of the rectified current detected at the rectified current detection part exceeds a previously determined abnormal rectified current threshold.

3. The power-supply control apparatus according to claim 1 or 2,
wherein the breaking circuit interrupts the driving command signal to be inputted to the rectifying circuit from the control circuit by judging that the input from the AC power supply is an abnormal input when an output voltage of the smoothing output circuit detected at the output voltage detection part exceeds a previously determined abnormal output voltage threshold.

4. The power-supply control apparatus according to any one of claims 1 to 3,
further comprising a sample-and-hold circuit which performs sample-and-hold operation of the rectified current from the rectifying circuit on the basis of the driving command signal which is for performing ON/OFF operation of the switching element,
the sample-and-hold circuit reproducing an input current waveform, and
the control circuit adjusting an ON period of the driving command signal on the basis of the reproduced input current waveform.

5. The power-supply control apparatus according to any one of claims 1 to 3,
wherein the rectifying circuit is constituted by a bidirectional switching circuit and a diode bridge,
the bidirectional switching circuit being connected in a short-circuitable way via the AC power supply and the reactor, and
the rectified current from the rectifying circuit being a sine-wave rectified waveform having the same phase as the input voltage of the AC power supply by performing ON/OFF driving of the bidirectional switching circuit without detecting polarity of the AC voltage of the AC power supply.

**Patentansprüche**

1. Stromversorgungssteuerungsvorrichtung enthaltend:

einen Gleichrichterschaltkreis (4) mit einem Schaltelement, der einen Wechselstrom von einer Wechselstromversorgung (1) über eine Drossel (2) erhält und in einen gleichgerichteten Strom umwandelt;

einen Glättungsausgangsschaltkreis (7), der den von dem Gleichrichterschaltkreis ausgegebenen gleichgerichteten Strom erhält, und einen Ausgang zu einer Gleichstromlast bildet;

ein Eingangsspannungserfassungsteil (51), das eine momentane Spannung einer Eingangsspannung von der Wechselstromversorgung erfasst, und Eingangsspannungserfassungsinformationen einschließlich Polaritätsinformationen und Absolutwertinformationen über die Eingangsspannung auf der Grundlage der erfassten momentanen Spannung bildet, und die Eingangsspannungserfassungsinformationen ausgibt;

ein Eingangsstromerfassungsteil (52), das einen Stromwandler aufweist, der einen Eingangsstrom von der Wechselstromversorgung erfasst, und das Informationen ausgibt, die einen Absolutwert einer Erfassungsspannung zeigen, der proportional zu dem von dem Stromwandler erfassten Eingangsstrom ist;

ein Erfassungsteil des gleichgerichteten Stroms (53), das einen momentanen Wert des gleichgerichteten Stroms erfasst, der von dem Gleichrichterschaltkreis in den Glättungsausgangsschaltkreis eingespeist wird, und Erfassungsinformationen des gleichgerichteten Stroms ausgibt;

ein Ausgangsspannungserfassungsteil (54), das eine Klemmenspannung des Glättungsausgangsschaltkreises erfasst, der mit dem Ausgang des Gleichrichterschaltkreises verbunden ist, und das Ausgangsspannungserfassungsinformationen ausgibt;

einen Steuerschaltkreis (24), in den die Eingangsspannungserfassungsinformationen, die Eingangsstromerfassungsinformationen, die Erfassungsinformationen des gleichgerichteten Stroms und die Ausgangsspannungserfassungsinformationen eingespeist werden, und der ein Ansteuerbefehlssignal ausgibt, das zum Ausführen des Einschalt-/Ausschaltvorgangs des Schaltelements dient, so dass der von dem Gleichrichterschaltkreis ausgegebene gleichgerichtete Strom zu einer sinusförmig gleichgerichteten Wellenform mit der gleichen Phase wie die Eingangsspannung wird; und

einen Unterbrechungsschaltkreis (21), der das in den Gleichrichterschaltkreis einzuspeisende Ansteuerbefehlssignal aus dem Steuerschaltkreis auf der Grundlage der Eingangsstromerfassungsinformationen, der Erfassungsinformationen des gleichgerichteten Stroms und der Ausgangsspannungserfassungsinformationen unterbricht,

wobei der Unterbrechungsschaltkreis das von dem Steuerschaltkreis in den Gleichrichterschaltkreis einzuspeisende Ansteuerungssignal unterbricht, wenn die Eingangsstromerfassungsinformationen einen zuvor bestimmten anormalen Eingangsstromschwellenwert überschreiten.

2. Stromversorgungssteuerungsvorrichtung nach Anspruch 1,
wobei der Unterbrechungsschaltkreis das von dem Steuerschaltkreis in den Gleichrichterschaltkreis einzuspeisende Ansteuerbefehlssignal unterbricht, indem er beurteilt, dass ein Betrieb des Gleichrichterschaltkreises anormal ist, wenn der momentane Wert des am Erfassungsteil des gleichgerichteten Stroms erfassten gleichgerichteten Stroms einen zuvor bestimmten anormalen Schwellenwert des gleichgerichteten Stroms überschreitet.

3. Stromversorgungssteuerungsvorrichtung nach Anspruch 1 oder 2,
wobei der Unterbrechungsschaltkreis das von dem Steuerschaltkreis in den Gleichrichterschaltkreis einzuspeisende Ansteuerbefehlssignal unterbricht, indem er beurteilt, dass der Eingang von der Wechselstromversorgung ein anormaler Eingang ist, wenn eine Ausgangsspannung des Glättungsausgangsschaltkreises, die am Ausgangsspannungserfassungsteil erfasst wird, einen zuvor bestimmten anormalen Ausgangsspannungsschwellenwert überschreitet.

4. Stromversorgungssteuerungsvorrichtung nach einem der Ansprüche 1 bis 3,
ferner enthaltend einen Abtast- und Halteschaltkreis, der den Abtast- und Haltebetrieb des gleichgerichteten Stroms von dem Gleichrichterschaltkreis auf der Grundlage des Ansteuerbefehlssignals durchführt, das zum Ausführen des Einschalt-/Ausschaltvorgangs des Schaltelements dient,
wobei der Abtast- und Halteschaltkreis eine Eingangsstromwellenform reproduziert, und
der Steuerschaltkreis eine Einschaltdauer des Ansteuerbefehlssignals auf der Grundlage der reproduzierten Eingangsstromwellenform einstellt.

5. Stromversorgungssteuerungsvorrichtung nach einem der Ansprüche 1 bis 3,
wobei der Gleichrichterschaltkreis aus einer bidirektionalen Schaltanordnung und einer Diodenbrücke besteht,
die bidirektionale Schaltanordnung über die Wechselstromversorgung und die Drossel kurzschlussfähig verbunden ist, und
der gleichgerichtete Strom von dem Gleichrichtungsschaltkreis eine sinusförmige gleichgerichtete Wellenform mit der gleichen Phase wie die Eingangsspannung der Wechselstromversorgung ist, indem das Ein-/Ausschalten der bidirektionalen Schaltanordnung durchgeführt wird, ohne die Polarität der Wechselspannung der Wechselstromversorgung zu erfassen.

**Revendications**

1. Appareil de commande d'alimentation électrique, comprenant:

   un circuit de redressement (4) ayant un élément de commutation, qui reçoit un courant alternatif provenant d'une alimentation électrique en courant alternatif (1) par l'intermédiaire d'un réacteur (2) et le convertit en un courant redressé;
   un circuit de sortie de lissage (7) qui reçoit le courant redressé délivré en sortie par le circuit de redressement, et forme une sortie vers une charge en courant continu;
   une partie de détection de tension d'entrée (51) qui détecte une tension instantanée d'une tension d'entrée provenant de l'alimentation électrique en courant alternatif, et qui forme des informations de détection de tension d'entrée comprenant des informations de polarité et des informations de valeur absolue concernant la tension d'entrée sur la base de la tension instantanée détectée, et délivre en sortie les informations de détection de tension d'entrée;
   une partie de détection de courant d'entrée (52) qui a un transformateur de courant qui détecte un courant d'entrée provenant de l'alimentation électrique en courant alternatif, et qui délivre en sortie des informations indiquant une valeur absolue d'une tension de détection proportionnelle au courant d'entrée détecté par le transformateur de courant;
   une partie de détection de courant redressé (53) qui détecte une valeur instantanée du courant redressé devant être entré dans le circuit de sortie de lissage à partir du circuit de redressement, et qui délivre en sortie des informations de détection de courant redressé;
   une partie de détection de tension de sortie (54) qui détecte une tension de borne du circuit de sortie de lissage connecté à la sortie du circuit de redressement, et qui délivre en sortie des informations de détection de tension de sortie;
   un circuit de commande (24) dans lequel les informations de détection de tension d'entrée, les informations de détection de courant d'entrée, les informations de détection de courant redressé, et les informations de détection de tension de sortie sont entrées, et qui délivre en sortie un signal de commande d'entraînement qui est destiné à effectuer un fonctionnement marche/arrêt de l'élément de commutation de telle sorte que le courant redressé délivré en sortie par le circuit de redressement devient une forme d'onde redressée à onde sinusoïdale ayant la même phase que la tension d'entrée; et
   un circuit de coupure (21) qui interrompt le signal de commande d'entraînement devant être entré dans le circuit de redressement à partir du circuit de commande sur la base des informations de détection de courant d'entrée, des informations de détection de courant redressé, et des informations de détection de tension de sortie,
   le circuit de coupure interrompant le signal de commande d'entraînement devant être entré dans le circuit de redressement à partir du circuit de commande lorsque les informations de détection de courant d'entrée dépassent un seuil de courant d'entrée anormal précédemment déterminé.

2. Appareil de commande d'alimentation électrique selon la revendication 1,
   dans lequel le circuit de coupure interrompt le signal de commande d'entraînement devant être entré dans le circuit de redressement à partir du circuit de commande en déterminant qu'un fonctionnement du circuit de redressement est anormal lorsque la valeur instantanée du courant redressé détecté au niveau de la partie de détection de courant redressé dépasse un seuil de courant redressé anormal précédemment déterminé.

3. Appareil de commande d'alimentation électrique selon la revendication 1 ou 2,
   dans lequel le circuit de coupure interrompt le signal de commande d'entraînement devant être entré dans le circuit de redressement à partir du circuit de commande en déterminant que l'entrée provenant de l'alimentation électrique en courant alternatif est une entrée anormale lorsqu'une tension de sortie du circuit de sortie de lissage détectée au niveau de la partie de détection de tension de sortie dépasse un seuil de tension de sortie anormale précédemment déterminé.

4. Appareil de commande d'alimentation électrique selon l'une quelconque des revendications 1 à 3,
   comprenant en outre un circuit échantillonneur-bloqueur qui effectue une opération d'échantillonnage et de blocage du courant redressé à partir du circuit de redressement sur la base du signal de commande d'entraînement qui est destiné à effectuer un fonctionnement marche/arrêt de l'élément de commutation,
   le circuit échantillonneur-bloqueur reproduisant une forme d'onde de courant d'entrée, et
   le circuit de commande réglant une période de marche du signal de commande d'entraînement sur la base de la forme d'onde de courant d'entrée reproduite.

5. Appareil de commande d'alimentation électrique selon l'une quelconque des revendications 1 à 3, dans lequel le circuit de redressement est constitué d'un circuit de commutation bidirectionnel et d'un pont de diodes, le circuit de commutation bidirectionnel étant connecté en court-circuit par l'intermédiaire de l'alimentation électrique en courant alternatif et du réacteur, et

le courant redressé provenant du circuit de redressement étant une forme d'onde redressée à onde sinusoïdale ayant la même phase que la tension d'entrée de l'alimentation électrique en courant alternatif en effectuant un entraînement marche/arrêt du circuit de commutation bidirectionnel sans détecter la polarité de la tension alternative de l'alimentation électrique en courant alternatif.

Fig. 1

Fig.2

## Fig.3A

INPUT
CURRENT
(A)

TIME

## Fig.3B

OUTPUT VOLTAGE
OF CURRENT
TRANSFORMER (V)

TIME

## Fig.3C

OUTPUT OF
SECOND
ABSOLUTE VALUE
DETECTION
CIRCUIT (V)

ABNORMAL
INPUT
CURRENT
THRESHOLD

TIME

Fig.4   (X) WHEN INCREASING RATE IS SMALL   (Y) WHEN INCREASING RATE IS LARGE

(a) INPUT CURRENT (A)

ACTUAL INTERRUPTION VALUE

ACTUAL INTERRUPTION VALUE

TIME

(b) CURRENT TRANSFORMER OUTPUT VOLTAGE (V)

ABNORMAL STATE DETECTION THRESHOLD

TIME

INTERRUPTION DELAY TIME    INTERRUPTION DELAY TIME

EP 2 157 684 B1

*Fig.5*

LOAD

CONTROL CIRCUIT

INTERRUPTION

S/H

ABSOLUTE VALUE

ABSOLUTE VALUE

PT

Vac

Vdc

|Vac|

*Fig.6*

(a)  INPUT  CURRENT  (A) ————————————————————————————————→ TIME

(b)  CURRENT  PASSING
THROUGH  RESISTOR  (A) ————————————————————————————→ TIME

Fig.7

Fig.8

Fig.9

(a)

(b)

Fig.10

**EP 2 157 684 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0388850 A2
- GB 2148553 A
- JP H04271299 B
- JP 2005318700 A
- JP 2000115999 A